# EUROPÄISCHE PATENTSCHRIFT

(11) **EP 0 336 076 B1**
(45) Veröffentlichungstag und Bekanntmachung des Hinweises auf die Patenterteilung: **29.09.1993**
(21) Anmeldenummer: 89102436.6
(22) Anmeldetag: 13.02.1989
(51) Int. Cl.: G05D 23/19, F25D 29/00, F25B 49/00

(54) **Verfahren zum Einstellen der Temperaturdifferenz zwischen Ein- und Ausschalttemperatur eines Kühlaggregats**
Adjusting method for the temperature difference between switch-on and switch-off temperatures of a cooling device
Méthode de réglage de la diffèrence de la température d'enclenchement et de déclenchement d'un aggrégat de refroidissement

(30) Priorität: 11.02.1988 DE 3804258
(43) Veröffentlichungstag der Anmeldung: 11.10.1989
(73) Patentinhaber: MEYER, Friedhelm, D-57319 Bad Berleburg (DE)
(72) Erfinder: MEYER, Friedhelm, D-57319 Bad Berleburg (DE)
(74) Vertreter: Klingseisen, Franz, Dipl.-Ing.

(56) Entgegenhaltungen:
- DE-A- 3 001 844
- DE-A- 3 145 215
- US-A- 4 172 555

## Beschreibung

Die Erfindung betrifft ein Verfahren nach dem Oberbegriff des Anspruchs 1.

Aus DE-A-31 45 215 ist eine elektronische Thermostateinrichtung zur Steuerung des Betriebs eines Ofens oder einer anderen eine Temperatur beeinflussenden Einrichtung bekannt, wobei eine Vorrichtung ein einer vorgegebenen Einstelltemperatur entsprechendes Signal erzeugt und eine andere Vorrichtung die Umgebungstemperatur mißt. Wenn die Umgebungstemperatur unter die Einstelltemperatur abfällt, wird der Ofen für eine vorbestimmte Zeit eingeschaltet. Die Einschaltzeit wird nach jedem Heizzyklus abhängig von der an der Thermostateinrichtung durch den Heizzyklus aufgetretenen Temperaturerhöhung um einen geringen Betrag verlängert oder verkürzt, um adaptiv einen vorbestimmten Temperaturanstieg während des Heizzyklus und der Periode eines thermischen Überschießens zu erreichen, die nach der Abschaltung des Ofens auftritt.

Aus US-A-4 172 555 ist ein thermostatisches Steuersystem für eine Gebäudeheiz- und/oder Kühlanlage bekannt, das ein gespeichertes Programm der erwünschten Temperaturen enthält, die innerhalb des Gebäudes bei vorbestimmten Zeiten innerhalb eines sich wiederholenden Zeitzyklus erreicht werden sollen. Um die optimale Zeit zu bestimmen, bei der das System angeschaltet werden muß, um den durch das Programm vorgegebenen nächsten Temperaturanstieg zu erreichen, wird der Ofen angeschaltet und eine kurze Zeit später abgeschaltet, worauf die Temperaturänderung gemessen wird, die sich in dem Gebäude als Ergebnis dieses Übergangsbetriebs ergibt. Die Zeit, bei der der Ofen eingeschaltet werden muß, um die durch das Programm vorgegebene nächste Temperatur zu erreichen, wird dann als Funktion der Rate der Temperaturänderung aus dem vorübergehenden Anschalten und der Differenz zwischen der augenblicklichen und der durch das Programm vorgegebenen Temperatur bestimmt.

Für den Betrieb einer Kühlanlage wird ein Sollwert einer z.B. im Kühlraum aufrechtzuerhaltenden Temperatur vorgegeben, wobei das Kühlaggregat jeweils eingeschaltet wird, sobald die Temperatur im Kühlraum um einen bestimmten Betrag über den Sollwert ansteigt, um die Raumtemperatur wieder auf den Sollwert zu bringen, während das Kühlaggregat abgeschaltet wird, wenn die Raumtemperatur um einen bestimmten Betrag unter den Sollwert absinkt. Diese Temperaturdifferenz zwischen Ein- und Ausschalttemperatur wird von einem Monteur eingestellt, wobei für die Auslegung dieser Temperaturdifferenz von einer üblichen, zu erwartenden Kühlbelastung des Kühlraumes ausgegangen wird. Ändert sich aber die Kühlbelastung beispielsweise durch Einbringen von mehr Kühlgut in den Kühlraum als üblich oder durch sehr wenig Kühlgut im Kühlraum, so entspricht die einmal eingestellte Temperaturdifferenz zwischen Ein- und Ausschalttemperatur nicht mehr den tatsächlichen Erfordernissen.

Der Erfindung liegt die Aufgabe zugrunde, ein verfahren der eingangs angegebenen Art vorzuschlagen, mittels dem die Temperaturdifferenz zwischen Ein- und Ausschalttemperatur und damit die Schalthäufigkeit des Aggregats an wechselnde Belastungen selbsttätig angepaßt wird.

Diese Aufgabe wird durch die Merkmale im Kennzeichen des Anspruchs 1 gelöst. Durch den Vergleich der Temperaturwerte im Kühlraum, die jeweils in einer vorgegebenen Zeiteinheit von dem Kühlaggregat unter dem vorgegebenen Sollwert erreicht werden, kann ein sich stabil einstellender Zustand ermittelt werden, der von der jeweiligen Belastung des Kühlraumes abhängig ist, worauf dieser Temperaturwert als obere und untere Grenze über und unter dem Sollwert zum Ein- und Ausschalten des Kühlaggregats beibehalten wird. Auf diese Weise wird die Schalthäufigkeit des Aggregats der vorhandenen Belastung selbsttätig angepaßt.

Vorteilhafte Ausgestaltungen der Erfindung sind in den weiteren Ansprüchen und in der nachfolgenden Beschreibung angegeben.

Eine beispielsweise Ausführungsform der Erfindung wird nachfolgend anhand der Zeichnung näher erläutert. Es zeigen
- Fig. 1: den Temperaturverlauf in einem Kühlraum über der Zeit bei geringer Last und
- Fig. 2: in entsprechender Darstellung den Temperaturverlauf bei hoher Last.

Im folgenden wird beispielsweise von einem Kühlaggregat ausgegangen, das zum Abtauen von Eis, das sich am Verdampfer gebildet hat, zunächst abgeschaltet ist und nach Erreichen der Abtauendtemperatur von beispielsweise 10°C wieder eingeschaltet wird, um den vorgegebenen Sollwert von beispielweise -18°C in dem Kühlraum wiederherzustellen und beizubehalten, in dem das Kühlaggregat angeordnet ist.

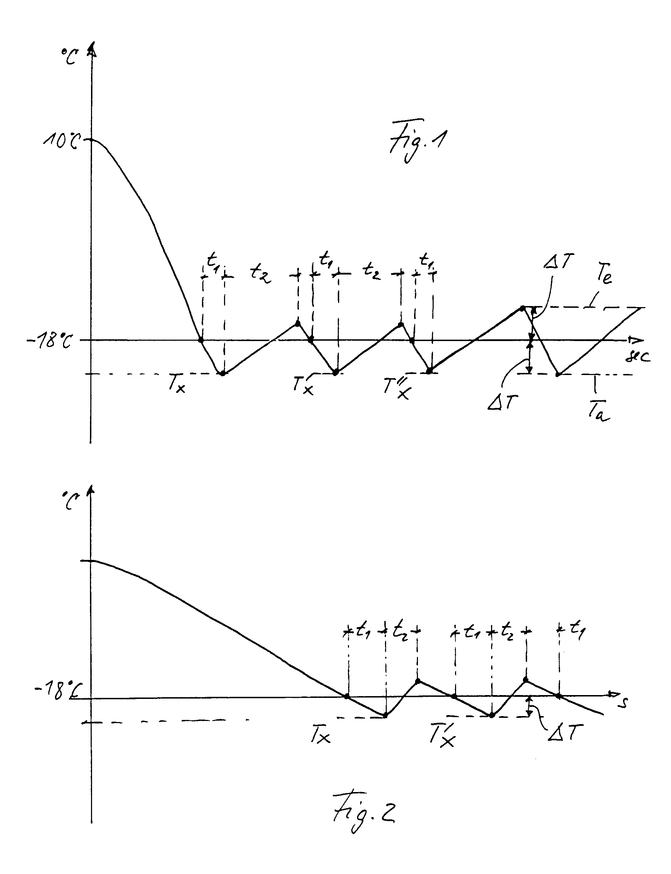

Üblicherweise ist in dem zu kühlenden Raum ein Temperaturfühler angeordnet, der den in den Fig. 1 und 2 wiedergegebenen Temperaturverlauf im Kühlraum liefert.

Nach Beendigung der Abtauphase wird zum Zeitpunkt 0 in Fig. 1 das Kühlaggregat eingeschaltet, worauf nach einer bestimmten Zeit der vorgegebene Sollwert von -18°C erreicht wird. Sobald die Temperatur im Kühlraum den Sollwert von -18°C erreicht, wird durch einen Zeitgeber eine Zeit t₁ in Lauf gesetzt, nach deren Ablauf die vom Temperaturfühler festgestellte Temperatur abgefragt wird. Diese am Ende von t₁ abgefragte Temperatur Tₓ liegt um einen bestimmten Betrag unter dem Sollwert von -18°C. Die gemessene Temperatur Tₓ wird in einer elektronischen Einrichtung gespeichert. Zugleich wird das Kühlaggregat von der elektronischen Steuereinrichtung abgeschaltet, so daß die Temperatur am Temperaturfühler wieder ansteigt.

Mit dem Abschalten des Kühlaggregats wird eine Zeit t₂ in Lauf gesetzt, bei deren Ablauf am Temperaturfühler abgefragt wird, ob die Temperatur den Sollwert erreicht oder überschritten hat. Liegt die bei Ablauf von t₂ festgestellte Temperatur über dem Sollwert, so wird das Kühlaggregat wieder eingeschaltet, so daß die Temperatur am Temperaturfühler wieder absinkt. Sobald der Sollwert am Temperaturfühler festgestellt wird, wird erneut die Zeit t₁ in Lauf gesetzt und bei deren Ablauf die Temperatur am Temperaturfühler abgefragt. Wird beispielsweise eine Temperatur T'ₓ unter dem Sollwert gemessen, so wird diese Temperatur T'ₓ gespeichert und mit der zuvor gemessenen Temperatur Tₓ verglichen. Gleichzeitig wird das Kühlaggregat wieder abgeschaltet und die Zeit t₂ in Lauf gesetzt.

Ergibt der Vergleich daß Tₓ gleich T′ₓ ist, so bleiben beide Temperaturen Tₓ und T′ₓ gespeichert, worauf nach Ablauf von t₂ erneut abgefragt wird, ob die Temperatur den Sollwert erreicht oder überschritten hat. Ist dies der Fall, so wird das Kühlaggregat wieder eingeschaltet, worauf bei Erreichen des Sollwerts erneut die Zeit t₁ in Lauf gesetzt und bei deren Ablauf die Temperatur am Temperaturfühler abgefragt wird. Die Temperatur T˝ₓ unter dem Sollwert wird wiederum gespeichert und mit beiden vorhergehenden Temperaturen Tₓ und T′ₓ verglichen. Ergibt der Vergleich, daß alle drei Temperaturen gleich sind, so wird daraus abgeleitet, daß sich ein stabiler Zustand im Kühlraum eingestellt hat. Der Abfragezyklus wird abgebrochen und die Temperaturdifferenz ΔT zwischen Sollwert und Tₓ festgestellt, worauf die Temperaturdifferenz über und unter dem Sollwert als Grenzwert zum Ein- und Abschalten des Kühlaggregats festgelegt wird, wie dies in Fig. 1 durch gestrichelte Linien über und unter dem Sollwert bei Tₑ und Tₐ angedeutet ist. Nachdem das Kühlaggregat beim Abfragen von T˝ₓ abgeschaltet wurde, steigt die Temperatur am Temperaturfühler nach einer gewissen Zeit wieder über den Sollwert, worauf aber erst bei Erreichen des oberen Grenzwertes Tₑ das Kühlaggregat wieder eingeschaltet wird, der um den Betrag ΔT über dem Sollwert liegt. Im weiteren Verlauf des Kühlbetriebs wird das Kühlaggregat erst dann wieder abgeschaltet, wenn am Temperaturfühler der untere Grenzwert Tₐ festgestellt wird, der um den Betrag ΔT unter dem Sollwert liegt. Die Temperaturdifferenz von 2ΔT zwischen Ein- und Ausschalttemperatur Tₑ und Tₐ beiderseits des Sollwertes wird bis zum nächsten Abtauvorgang des Kühlaggregats oder bis zur nächsten Betriebsänderung beibehalten, worauf bei Neubeginn einer weiteren Betriebsphase des Kühlaggregats der beschriebene Vorgang wiederholt wird, um erneut die Temperaturdifferenz 2ΔT zu bestimmen und für den weiteren Betrieb festzulegen.

Wird bei dem Vergleich der Temperatur T˝ₓ mit den beiden vorhergehenden Temperaturen Tₓ und T′ₓ beispielsweise festgestellt, daß T˝ₓ kleiner oder größer ist als die vorhergehenden Werte, so werden die vorhergehenden Temperaturen Tₓ und T′ₓ im Speicher der elektronischen Steuereinrichtung gelöscht, wobei lediglich der Wert T˝ₓ im Speicher beibehalten wird. Hierauf wird ausgehend von der Temperatur T˝ₓ der Abfragevorgang so lange wiederholt, bis eine Sequenz von drei gleichen Temperatren Tₓ festgestellt wird. Solange drei aufeinanderfolgende Werte Tₓ nicht gleich sind, wird davon ausgegangen, daß sich noch kein stabiler Zustand im Kühlraum eingestellt hat. Anstelle von drei aufeinanderfolgenden Werten Tₓ können auch zwei oder vier oder mehrere vorgegeben werden, die zum Erkennen eines stabilen Zustandes und zum Festlegen der Temperaturdifferenz 2ΔT gleich sein müssen.

Bei einem Kühlaggregat ist üblicherweise eine Wiederanlaufsperre in Form eines Zeitrelais vorgesehen, das nach dem Abschalten des Aggregats ein Wiedereinschalten erst dan zuläßt. wenn eine vorbestimmte Zeit von besipielsweise 180 s verstrichen ist. Durch eine derartige Wiederanlaufsperre wird der Motor des Kühlaggregats vor einer Beschädigung durch zu hohe Schalthäufigkeit geschützt. Die bei dem vorausgehenden Beispiel angegebene Zeit t₂ muß deshalb größer oder gleich der Zeit von beispielsweise 180 s der Wiederanlaufsperre sein.

Anstelle einer vorgegebenen Zeit t₂ ist es auch möglich, nach Ablauf der Wiederanlaufsperre von beispielsweise 180 s nach Ablauf von t₁ in kurzen Zeitabständen die Temperatur am Temperaturfühler abzufragen, worauf das Kühlaggregat wieder eingeschaltet wird, sobald eine Temperatur am oder über dem Sollwert festgestellt wird.

Die Zeit t₁ kann beispielsweise auf 300 s eingestellt werden. Es ist aber auch möglich, t₁ auf beispielsweise 180 s festzulegen, wobei die von Aggregathersteller vorgegebene Mindestlaufzeit zu berücksichtigen ist.

Zweckmäßigerweise wird bei einem festgestellten Temperaturwert Tₓ eine Toleranzgrenze von beispielsweise +/-0,5°C vorgegeben, innerhalb der ein folgender Meßwert T′ₓ oder T˝ₓ als gleich zu Tₓ angesehen wird. Wenn bei der zweiten oder dritten Messung der Vergleichswert außerhalb der Toleranz von +/- 0,5°C liegt, beispielsweise verursacht durch Belastungsschwankungen des Kühlraumes, so wird mit dem letzten Vergleichswert die zuvor beschriebene Folge von drei Messungen neu begonnen.

Während sich bei einer geringen Kühllast ein relativ großes ΔT nach Ablauf von t₁ ergibt, erhält man bei großer Kühllast nach Ablauf von t₁ ein kleines ΔT, wie dies aus einem Vergleich der Fig. 1 und 2 ersichtlich ist, wobei Fig. 1 in etwa den Temperaturverlauf bei geringer Kühllast und Fig. 2 den Temperaturverlauf bei hoher Kühllast wiedergibt. Entsprechend wird durch das beschriebene Verfahren die Temperaturdifferenz zwischen Einschalttemperatur Tₑ und Ausschalttemperatur Tₐ in Abhängigkeit vom Belastungszustand des Kühlaggregats eingestellt und damit auch die Schalthäufigkeit des Kühlaggregats dem Belastungszustand angepaßt. Im Gegensatz dazu wird im Stand der Technik die Temperaturdifferenze zwischen Einschalttemperatur Tₑ und Ausschalttemperatur Tₐ vom Anlagenbauer nach Gefühl eingestellt, wobei diese fest eingestellte Temperaturdifferenz allenfalls einem Betriebszustand in etwa entspricht, nicht aber den während des Betriebs einer Kühlanlage auftretenden, variierenden Betriebszuständen.

Die automatische Anpassung der Temperaturdifferenz zwischen Ein- und Ausschalttemperatur bzw. der Schalthäufigkeit an den Belastungszustand wird bei einer Kühlanlage zweckmäßigerweise nach jedem Abtauvorgang vorgenommen, der erfahrungsgemäß alle 8 bis 24 Stunden abläuft.

Bei häufig wechselnder Kühllast kommt das beschriebene Steuerverfahren nicht zum Einsatz, vielmehr nur dann, wenn über längere Zeiträume etwa gleichbleibende Temperaturzustände vorhanden sind. Dies ist üblicherweise nach dem Abtauen bei Kühlanlagen der Fall.

Da bei einem Kühlaggregat der Druck auf der Saugseite des Kompressors abhängig ist von der Temperatur im Verdampfer, ist es auch möglich, anstelle einer Temperaturmessung im Verdampfer eine Druckmessung vorzunehmen und anhand des vom Druckfühler gelieferten elektrischen Signals das zuvor beschriebene Steuerverfahren durchzuführen, wobei das vom Druckfühler gelieferte elektrische Signal im wesentlichen dem Verlauf des Temperatursignals in den Fig. 1 und 2 entspricht.

Das Steuerverfahren wurde anhand eines Kühlaggregats beschrieben, es ist aber auch möglich, in gleicher Weise ein Heizaggregat zu steuern, insbesondere im Zusammenhang mit einer Wärmepumpe, wobei in Abhängigkeit von der vorhandenen Heizlast die Temperaturdifferenz zwischen Ein- und Ausschalttemperatur des Heizaggregats eingestellt wird. Hierbei liegen die gemessenen Temperaturwerte Tₓ über einem vorgegebenen Sollwert, wie auch die Ausschalttemperatur Tₐ über dem Sollwert und die Einschalttemperatur Tₑ unter dem Sollwert liegt. Auch hierbei kann eine Raumtemperatur oder eine Medientemperatur abgefragt, gespeichert und verglichen werden, wie dies auch bei einem Kühlaggregat der Fall ist.

Im Falle der Überwachung einer Medientemperatur kann beispielsweise die Wassertemperatur in einem Boiler oder die Öltemperatur in einem Ölkühler im Zusammenhang mit einer Wärmepumpe gemessen werden.

Wenn beispielsweise im Falle eines Kühlaggregats von Anlagenbauer nach dem Stand der Technik eine unveränderliche Temperaturdifferenz zwischen Ein- und Ausschalttemperatur eingestellt wird und die Kühllast in dem auf eine bestimmte Kapazität ausgelegten Kühlraum erheblich unter der üblichen liegt, auf die die Temperaturdifferenz zwischen Ein- und Ausschalttemperatur ursprünglich abgestimmt wurde, so wird das Kühlaggregat in kurzen Zeitabständen ein- und ausgeschaltet, weil wegen der zu geringen Kühllast nach Erreichen von Tₑ der Grenzwert Tₐ schneller erreicht wird. In einem solchen Falle kann das Kühlaggregat bis an die Schalthäufigkeitsgrenze und darüber ein- und ausgeschaltet werden. Dagegen wird durch das beschriebene Steuerverfahren spätestens nach einem Abtauvorgang eine neue, größere Temperaturdifferenz zwischen Ein- und Ausschalttemperatur bestimmt, so daß die Schalthäufigkeit selbsttätig verringert wird.

Es is auch möglich, beispielsweise die Schalthäufigkeit des Kühlaggregats in deren Grenzbereich zu überwachen und den beschriebenen Abfragezyklus dann einzuleiten, wenn eine hohe Schalthäufigkeit festgestellt wird, so daß ein Abtauvorgang nicht abgewartet werden muß. In gleicher Weise ist es möglich, bei einer anderen Änderung des Belastungszustandes des Aggregats den Abfragezyklus einzuleiten, oder in bestimmten Zeitabständen den Zustand abzufragen und bei einer Änderung des Betriebszustandes den Abfragezyklus wieder zu beginnen.

## Patentansprüche

1. Verfahren zum Einstellen der Temperaturdifferenz zwischen Ein- und Ausschalttemperatur eines Heizaggregats bzw. insbesondere eines Kühlaggregats im Bereich eines aufrechtzuerhaltenden Sollwertes der Temperatur eines Mediums oder eines Raumes,
**dadurch gekennzeichnet**,
daß während des Betriebs des Heiz- bzw. Kühlaggregats wiederholt die Temperatur (Tₓ) ermittelt wird, die ausgehend von dem vorgegebenen Sollwert jeweils nach Ablauf einer vorgegebenen Zeiteinheit (t₁) von dem Aggregat unter bzw. über dem Sollwert erreicht wird, daß diese ermittelten Temperaturen (Tₓ, T'ₓ, T''ₓ) verglichen werden und die Temperaturdifferenz (ΔT) zwischen dem Sollwert und jener Temperatur (Tₓ), die mit mehreren vorhergehend gemessenen Temperaturen (Tₓ) übereinstimmt, zur Einstellung der Temperaturdifferenz (ΔT) zwischen Sollwert und Ein- sowie Ausschalttemperatur (Te, Ta) verwendet wird, wobei das Verfahren automatisch abläuft.

2. Verfahren nach Anspruch 1,
dadurch gekennzeichnet,
daß wenigstens bei jedem Neubeginn einer Betriebsperiode des Aggregats bei Erreichen des Sollwertes eine Zeit (t₁) in Lauf gesetzt wird, nach deren Ablauf die erreichte Temperatur (Tₓ) abgefragt, gespeichert und das Aggregat abgeschaltet wird, worauf das Aggregat wieder eingeschaltet wird, nachdem die zu überwachende Temperatur bei abgeschaltetem Gerät den Sollwert erreicht oder überschritten hat, daß bei Erreichen des Sollwertes bei eingeschaltetem Aggregat die vorgegebene Zeit (t₁) wieder in Lauf gesetzt und nach deren Ablauf die erreichte Temperatur abgefragt, gespeichert und das Aggregat abgeschaltet wird, wobei die gemessene Temperatur (T'ₓ) mit der vorher gemessenen Temperatur (Tₓ) verglichen wird, und daß diese Schritte so lange wiederholt werden, bis eine vorbestimmte Anzahl von aufeinanderfolgenden Temperaturwerten (Tₓ) gleich ist, worauf die Differenz zwischen dieser Temperatur (Tₓ) und dem Sollwert festgestellt und diese Temperaturdifferenz (ΔT) über und unter dem Sollwert als Ein- und Ausschalttemperatur für den weiteren Betrieb des Aggregats beibehalten wird.

3. Verfahren nach den Ansprüchen 1 und 2,
dadurch gekennzeichnet,
daß für den Vergleich der gemessenen Temperaturen (Tₓ) ein Toleranzbereich um den gemessenen Temperaturwert vorgegeben wird, innerhalb dem ein erneut gemessener Temperaturwert (T'ₓ) als gleich bewertet wird.

4. Verfahren nach den Ansprüchen 1 bis 3,
dadurch gekennzeichnet,
daß jeweils drei aufeinanderfolgend gleiche Temperaturwerte (Tₓ) für die Einstellung der Temperaturdifferenz zwischen Ein- und Ausschalttemperatur verwendet werden.

5. Verfahren nach den Ansprüchen 1 bis 4,
dadurch gekennzeichnet,
daß bei aufeinanderfolgend ungleichen Temperaturen (Tₓ) der zuletzt gemessene Temperaturwert gespeichert und der oder die vorher gemessenen Temperaturwerte gelöscht werden, worauf mit dem zuletzt gemessenen Temperaturwert der Zyklus erneut beginnt.

## Claims

1. Process for setting the temperature difference between the switching on and switching off temperature of a heating unit or more particularly a refrigeration unit in the region of a nominal temperature level which is to be maintained in a medium or a space, characterised in that during operation of the heating or refrigeration unit the temperature (Tₓ) reached by the unit below or above the rated value, starting from the given rated value after a predetermined unit of time (t₁) has expired, is repeatedly measured, the temperatures measured (Tₓ, T'ₓ, T''ₓ) are compared and the temperature difference (ΔT) between the rated value and the temperature (Tₓ), which coincides with a number of previously measured temperatures (Tₓ), is used to set the temperature difference (ΔT) between the rated value and the switching on and switching off temperature (Te, Ta), this process occurring automatically.

2. Process according to claim 1, characterised in that, at least at the fresh start of each operating period of the unit, when the rated value is reached, a time (t₁) is started at the end of which the temperature reached (Tₓ) is scanned and stored and the unit is switched off, after which the unit is switched on again, once the temperature being monitored has reached or exceeded the rated value, with the apparatus switched off, and when the rated value is reached with the unit switched on the given time (t₁) is started again and after this time has expired the temperature reached is scanned and stored and the unit is switched off, whilst the temperature (T'ₓ) measured is compared with the temperature (Tₓ) measured previously, and these steps are repeated until a predetermined number of successive temperature values (Tₓ) are identical, after which the difference between this temperature (Tₓ) and the rated value is determined and this temperature difference (ΔT) above and below the rated value is maintained as a switching on and switching off temperature for subsequent operation of the unit.

3. Process according to claims 1 and 2, characterised in that, for comparison of the temperatures (Tₓ) measured, a tolerance range around the temperature measured is prescribed, within which a newly measured temperature level (T'ₓ) is counted as identical.

4. Process according to claims 1 to 3, characterised in that three successive identical temperature measures (Tₓ) are used to set the temperature difference between the switching on and switching off temperatures.

5. Process according to claims 1 to 4, characterised in that if successive non-identical temperature (Tₓ) are measured the temperature measured last is stored and the temperature or temperatures measured previously are cancelled, then the cycle begins afresh with the last temperature measured.

## Revendications

1. Procédé pour le réglage de la différence de température d'enclenchement ou de mise en marche et de déclenchement ou de mise à l'arrêt d'un appareil de chauffage ou notamment d'un appareil de refroidissement ou appareil frigorifique dans la plage d'une valeur nominale de le température à maintenir dans une pièce ou dans un milieu,
caractérisé en ce que, pendant le fonctionnement de l'appareil de chauffage ou de l'appareil de refroidissement ou frigorifique, la température (Tₓ) est calculée de façon réitérés, la température qui, à partir de la valeur nominale prédonnée, franchit en plus au en moins la valeur nominale à l'expiration d'une unité de temps prédonnée (t₁), en ce que ces températures calculées (Tₓ, T'ₓ, T''ₓ) sont comparées et la différence de température (ΔT) entre la valeur nominale et cette température (Tₓ), qui coïncide avec plusieurs températures (Tₓ) mesurées précédemment pour le réglage de la différence de température (ΔT) entre la valeur nominale et une température de mise en marche et de mise à l'arrêt (Te, Ta), moyennant quoi le procédé s'effectue automatiquement.

2. Procédé selon la revendication 1,
caractérisé en ce qu'au moins à chaque nouveau départ d'une période de service de l'appareil lorsque la valeur nominale est atteinte, un temps (T₁) est déclenché, temps à l'écoulement duquel la température atteinte (Tₓ) est interrogée, mémorisée et l'appareil est mis à l'arrêt, l'appareil étant de nouveau mis en marche lorsque la température à surveiller a atteint ou dépassé, lorsque l'appareil est arrêté, la valeur nominale, en ce que lorsque la valeur nominale pour l'appareil en marche est atteinte, le temps prédonné (T₁) est de nouveau déclenché et à l'écoulement de celui-ci, la température atteinte est interrogée, mémorisée et l'appareil est mis à l'arrêt, la température mesurée (T'ₓ) étant comparée avec la température (Tₓ) mesurée précédemment et en ce que ces opérations se répètent aussi longtemps qu'un nombre prédéterminé de valeurs de température successives (Tₓ) est identique, après quoi lorsque la différence entra cette température (Tₓ) et la valeur nominale est constatée et cette différence de température (ΔT) supérieure ou inférieure à la valeur nominale est conservée en tant que température de mise en marche et de mise à l'arrêt pour la poursuite du fonctionnement de l'appareil.

3. Procédé selon les revendications 1 et 2,
caractérisé en ce que pour la comparaison des températures mesurées (Tₓ), il est prédonné une plage de tolérances pour la valeur de température mesurée, plage de tolérances à l'intérieur de laquelle une valeur de température (T'ₓ) mesurée à nouveau est considérée comme étant égale ou identique.

4. Procédé selon les revendications 1 à 3,
caractérisé en ce que sont respectivement utilisées trois valeurs de température identiques successives (Tₓ) pour le réglage de la différence de température entre la température de mise en marche et de mise à l'arrêt.

5. Procédé selon les revendications 1 à 4,
caractérisé en ce que pour des températures successives inégales (Tₓ), on mémorise la valeur de température mesurée en dernier et la ou les valeurs de température mesurées précédemment sont effacées, après quoi on recommence le cycle avec la valeur de température mesurée en dernier.
